(19) Europäisches Patentamt
European Patent Office
Office européen des brevets

(11) **EP 1 926 643 B1**

(12) **EUROPÄISCHE PATENTSCHRIFT**

(45) Veröffentlichungstag und Bekanntmachung des Hinweises auf die Patenterteilung:
**29.04.2009  Patentblatt 2009/18**

(21) Anmeldenummer: **06793535.3**

(22) Anmeldetag: **14.09.2006**

(51) Int Cl.:
*B60T 8/1764* (2006.01)      *B62D 6/00* (2006.01)

(86) Internationale Anmeldenummer:
**PCT/EP2006/066384**

(87) Internationale Veröffentlichungsnummer:
**WO 2007/031567 (22.03.2007 Gazette 2007/12)**

(54) **VERFAHREN ZUM ERMITTELN EINER INHOMOGENEN FAHRBAHN**

METHOD FOR DETERMINING AN INHOMOGENEOUS ROADWAY

PROCEDE POUR DETECTER UNE TRAJECTOIRE DE CIRCULATION NON HOMOGENE

(84) Benannte Vertragsstaaten:
**DE FR**

(30) Priorität: **14.09.2005  DE 102005043727
14.09.2006  DE 102006043931**

(43) Veröffentlichungstag der Anmeldung:
**04.06.2008  Patentblatt 2008/23**

(73) Patentinhaber: **Continental Teves AG & Co. oHG
60488 Frankfurt (DE)**

(72) Erfinder:
• **SCHÜTZ, Christof
65439 Flörsheim (DE)**
• **ANDRÉ, Yann
60599 Frankfurt Am Main (DE)**
• **GUTWEIN, Robert
64347 Frankfurt Am Main (DE)**

(56) Entgegenhaltungen:
**WO-A-01/96159          WO-A-20/04005093
GB-A- 2 298 013**

EP 1 926 643 B1

**Beschreibung**

Verfahren zum Ermitteln einer inhomogenen Fahrbahn in einer Fahrsituation von Fahrzeugen, die sich auf einer Fahrbahn mit seitenweise unterschiedlichen Reibwerten bei aktiver ABS-Regelung und aktiver Giermomentenbegrenzung (GMB) eines Vorderrades (HM-Rad) auf der Hochreibwertseite befinden und ein Verfahren zur Erzeugung eines additiven Zusatzmoments am Lenkrad oder an den Rädern eines Fahrzeugs, wobei das Zusatzmoment in Abhängigkeit von einer Fahrsituation auf einer Fahrbahn mit seitenweise unterschiedlichen Reibwerten ($\mu$ - *split*) aufgeprägt wird.

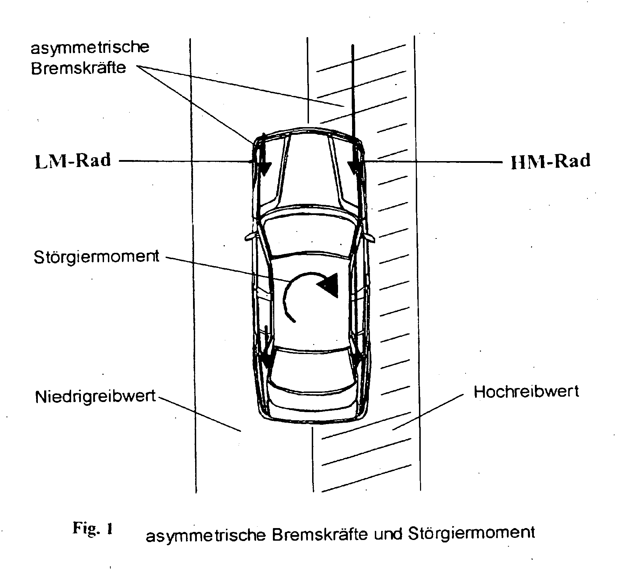

Bei Bremsungen auf inhomogenen Fahrbahnen (d.h. Fahrbahnen mit unterschiedlichen Reibwerten auf der linken bzw. rechten Fahrzeugseite) treten aufgrund der unterschiedlichen Reibwerte (rechts - links) asymmetrische Bremskräfte auf. Aus diesen asymmetrischen Bremskräften resultiert ein Giermoment um die Fahrzeughochachse, welches das Fahrzeug in eine Gierbewegung in Richtung der Straßenseite mit dem höheren Reibwert versetzt (siehe Figur 1).

Fahrzeuge ohne das elektronische Bremssystem ABS werden in solchen Fahrsituationen instabil, da beim Blockieren der Räder die Seitenführungskraft der Reifen verloren geht. Das Fahrzeug wird durch das durch die asymmetrischen Bremskräfte entstandene Giermoment zur Hochreibwertseite hin in schnelle Drehbewegungen um die Fahrzeughochachse versetzt (Schleudern).

Um zu vermeiden, dass die Räder des Kraftfahrzeugs beim Betätigen der Bremse infolge eines vom Fahrzeuglenker aufgebrachten zu hohen Bremsdrucks blockieren und das Kraftfahrzeug dadurch seine Stabilität oder seine Lenkfähigkeit verliert, ist die hydraulische Bremsanlage des Fahrzeugs mit einer Antiblockier-Regeleinrichtung ausgestattet, d. h. als blockiergeschützte hydraulische Bremsanlage ausgebildet.

Durch eine Antiblockier-Regeleinrichtung, wird bei erkannter Blockiergefährdung eines oder mehrerer Fahrzeugräder jeweils zumindest in einem Teil der hydraulischen Bremsanlage der Bremsdruck unabhängig von der durch den Fahrzeuglenker aufgebrachten Bremspedalkraft selbsttätig so lange moduliert, d. h. so lange abgesenkt, konstant gehalten und wieder angehoben, bis keine Blockiergefährdung mehr vorliegt. Antiblockier-Regeleinrichtungen für hydraulische Kraftfahrzeug-Bremsanlagen haben also ganz allgemein die Aufgabe, insbesondere bei glatter Fahrbahn und bei voller Betätigung der Betriebsbremsanlage (z. B. bei Panikbremsungen) die Richtungsstabilität sowie die Lenkfähigkeit des Fahrzeugs bei möglichst kurzen Anhalte- bzw. Bremswegen sicherzustellen.

Auf Fahrbahnen mit merklich unterschiedlich großen Reibwerten rechts/links ($\mu$-split) kommt es dann aber infolge der dann sehr unterschiedlich großen wirksamen Bremskräfte an den rechten und an den linken Fahrzeugrädern zu einer Verringerung der Richtungs- bzw. Fahrstabilität des Fahrzeugs. Diese starke Unsymmetrie bzw. Unausgeglichenheit der wirksamen Bremskräfte an der rechten und an der linken Fahrzeugseite erzeugt in Abhängigkeit von diesen asymmetrischen Kräften ein das Fahrzeug um seine Hochachse drehendes, mehr oder weniger großes Giermoment. Um dem entgegenzuwirken und die Richtungs- bzw. Fahrstabilität zu bewahren, d. h. das Fahrzeug auf Kurs zu halten, müßte der Fahrzeuglenker das Lenkrad in dieser Situation äußerst reaktionsschnell korrigierend betätigen, was in solchen Notsituationen aber selbst versierten Fahrzeuglenkern nur selten halbwegs zufriedenstellend gelingt.

Bei blockiergeschützten hydraulischen Kraftfahrzeug-Bremsanlagen besteht in solchen Situationen also generell ein Zielkonflikt. Einerseits wird angestrebt, beim Bremsen möglichst kurze Brems- bzw. Anhaltewege zu erzielen, andererseits ist es aber auch wichtig, beim Bremsen die Richtungs- bzw. Fahrstabilität sowie die Lenkfähigkeit des Fahrzeuges aufrechtzuerhalten.

Es ist daher inzwischen zur allgemeinverbindlichen Philosophie der Hersteller und Betreiber von blockiergeschützten hydraulischen Kraftfahrzeug-Bremsanlagen geworden, der Aufrechterhaltung von Richtungs- bzw. Fahrstabilität sowie der Lenkfähigkeit des Fahrzeugs eine höhere Priorität einzuräumen als der Erzielung möglichst kurzer Bremswege.

Um der Richtungs- und Fahrstabilität des Fahrzeugs zu erhalten, wird die ABS-Regelstrategie in solchen Fahrsituationen angepasst. Dabei werden zumindest die beiden Hinterräder nach dem so genannten "SelectLow "-Prinzip blockiergeregelt, d. h. in Abhängigkeit vom jeweils gerade mit dem niedrigsten Reibwert betriebenen Fahrzeugrad. Das bedeutet, dass in der oben beschriebenen Betriebssituation die Bremse des auf dem höheren Reibwert $\mu$ umlaufenden Hinterrads nur mit demselben vergleichsweise niedrigen Bremsdruck beaufschlagt wird, wie die Bremse des auf dem niedrigeren Reibwert umlaufenden anderen Hinterrades, obgleich es wegen des an ihm vorherrschenden höheren Reibwertes auch ohne zu blockieren stärker abgebremst werden könnte. An beiden Hinterrädern werden hierbei also gleich große bzw. gleich kleine Bremskräfte aufgebracht, so dass diese nichts zur Erzeugung eines Giermomentes beitragen. Da das auf dem höheren Reibwert umlaufende Hinterrad weniger stark als möglich abgebremst wird, besitzt dieses ein entsprechend hohes Potential zur Führung von Seitenkräften, was der Richtungs- bzw. Fahrstabilität des Fahrzeugs zugute kommt.

Erkauft wird die gute Richtungs- und Fahrstabilität jeweils mit längeren Bremswegen, da die auf höheren Reibwerten umlaufenden Fahrzeugräder bei diesem Regelungsprinzip weniger stark abgebremst werden als der dort herrschende Kraftschluss es an sich zulassen würde.

EP 1 926 643 B1

Soweit bei einer blockiergeschützten hydraulischen Kraftfahrzeug-Bremsanlage mit nach dem "Select-Low"-Prinzip blockiergeschützten Hinterrädern die beiden Vorderradbremsen individuell durch jeweils eigene Einrichtungen blockiergeschützt sind, ist es üblich, die Wirkung eines sich gegebenenfalls infolge unterschiedlich großer Bremskräfte am rechten und am linken Vorderrad aufbauenden Giermoments durch eine der individuellen Blockierschutzregelung der beiden Vorderräder überlagerte so genannte "Giermomemtbegrenzung (GMB)" abzuschwächen. Durch die überlagerte "Giermomentbegrenzung" wird dafür gesorgt, dass der Bremsdruck am auf dem höheren Reibwert umlaufenden Vorderrad (HM-Rad) langsamer aufgebaut wird als an sich möglich, um dem Fahrzeuglenker durch das daraus resultierende verzögerte Aufbauen des Giermoments zusätzliche Zeit zum Reagieren zu geben, d. h. zum Gegenlenken. Auch die überlagerte "Giermomentbegrenzung" trägt natürlich zu einer zusätzlichen gewissen Verschlechterung des erreichbaren Brems- bzw. Anhaltewegs bei.
Aus der DE 39 25 828 A1 ist bereits eine Antiblockierregelung mit GMB bekannt, die zur Bestimmung der Druckdifferenz den vom Fahrer eingesteuerten Druck an dem rechten und linken Rad misst und die zulässige Druckdifferenz über einen Vergleich des Solldrucks mit dem Istdruck ermittelt. Die DE 41 14 734 A1 beschreib darüber hinaus ein Antiblok-kiersystem mit GMB das ohne Drucksensoren auskommt und fortlaufend aus Druckabbausignalen einen die Druckdifferenz an den beiden Rädern der einen Achse wiedergebenden Wert ermittelt.

Weiterhin ist aus der DE 44 41 624 A1 eine "Giermomemtbegrenzung" bekannt, die bei Bremsmanövern auf μ-Flecken-Fahrbahnen eine Sonderregelung startet. Als vorgegebene Kriterien für die Aktivierung der Sonderregelungedingungen werden die Bremsdruckabbaudifferenzen an den Vorderrädern, die Fahrzeuggeschwindigkeit, der Schlupf des LM-Vorderrades, die Zeitdauer der Instabilität des LM-Vorderrades und das HM-Rad bewertet.

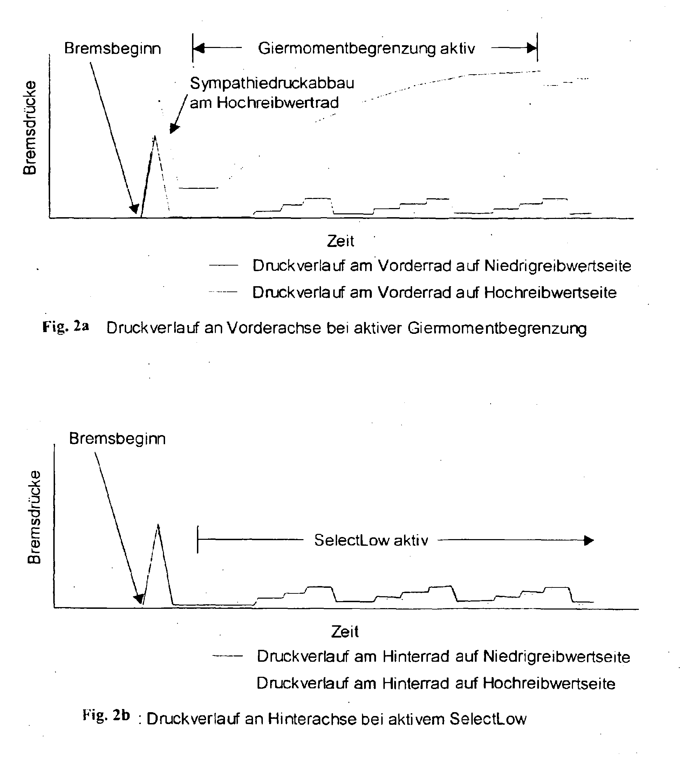

Bei einer Antiblockierregelung mit SelectLow und GMB, deren prinzipielle Druckverläufe siehe Figur 2a bzw. 2b dargestellt sind, gibt es keine spezielle μ-split-Erkennung. Es führt dazu, dass oft GMB erkannt wird, auch wenn das Fahrzeug auf einer homogenen Fahrbahn bremst. Wenn ein Vorderrad in die ABS-Regelung kommt, erfolgt sofort ein Druckstop auf dem anderen.Vorderrad, dem HM-Rad. Ein sogenannter Sympathie-Abbaupuls kann nach dem Druckstop am Hochreibwertrad durchgeführt werden, wenn das Radverhalten auf der Niedrigreibwertseite eine gewisse Dynamik zeigt. Die Druckdifferenz wird auch nur langsam aufgebaut. Eine genauere Erkennung der inhomogenen Fahrbahn ist bei der GMB nicht nötig, da das beschriebene Verhalten keinen wesentlichen Bremsleistungs- und keinen Stabilitätsverlust verursacht. Die beiden Vorderräder haben das gleiche Blockierdruckniveau, da es sich um eine homogene Fahrbahn handelt. Das vermutliche Hochreibwertrad ist deswegen auch nah am Blockierdruckniveau. Ein ungewünschter GMB Eingriff ist daher akzeptabel.

Es ist auch bereits ein Kraftfahrzeug mit einer blockiergeschützten hydraulischen Bremsanlage mit GMB bekannt ( DE 40 38 079 A1), die das bei einer ABS-Regelung in einer μ-*split* Fahrsituation auftretende Giermoment dadurch kompensiert, dass ein von der Differenz der getrennt eingeregelten Bremsdrücke abhängiger Kompensations-Lenkwinkel eingestellt bzw. dem vom Fahrer vorgegebenen Lenkwinkel überlagert wird. Der autonome Kompensations-Lenkwinkel verbessert die Beherrschbarkeit beim Bremsen auf inhomogenen Fahrbahnen. Die μ - *split* Fahrsituation wird dabei über die gemessenen oder über die durch einen Schätzalgorithmus mit den Ausgangsdaten der ABS-Ventilansteuerzeiten geschätzten Bremsdrücke ermittelt.

Diese für die Fahrzeuge mit Aktivlenkung auf der Berechnung der Druckdifferenz an der Vorderachse zwischen dem Rad auf der Hoch- und Niedrigreibwertseite beruhend μ -split Erkennung führt dazu, dass die Erkennung spät erfolgt. Der Lenkeingriff kann deswegen nicht früh genug gegeben werden. Die Bremsleistung ist daher nicht optimal. Das Risiko einer Fehlerkennung besteht auch, da das Radverhalten nicht analysiert wird. Eine fehlerhafte GMB-Erkennung verschlechtert bei einem autonomen Lenkeingriff den Komfort oder sogar die Stabilität des Fahrzeugs.

Der Erfindung liegt daher die Aufgabe zugrunde eine μ-split-Erkennung im Antiblockierregler zu Verfügung zu stellen, die von einem aktiven Lenksystem genutzt werden kann.

Bevorzugt handelt es sich um ein Lenksystem, wie es in der WO 2004/005093 A1 beschrieben ist.

Diese Aufgabe wird durch die Merkmale der Ansprüche 1 und 8 gelöst.

Vorteilhafte Weiterbildungen der Erfindung sind in den Unteransprüchen angegeben.

Die erfindungsgemäße μ-split Erkennung ist sicherer, da sie nicht nur auf dem Druckmodell basiert ist. Die Fehlerkennung ist unwahrscheinlicher. Stärkere Lenkeingriffe können deswegen am Lenkrad gegeben werden, ohne dass die Stabilität wegen einer Fehlerkennung verschlechtert werden könnte.

Die μ-split Erkennung nach der Erfindung ist darüber hinaus schneller, weil eine Druckdifferenz zwischen den Rädern einer Achse noch nicht vorhanden sein muss, damit der Regler einen Eingriff in das Lenksystem auslöst. So ist durch den Einsatz des Regelsystems in Kombination mit einem aktiven Lenksystem ohne Stabilitätsverlust eine Bremswegverkürzung möglich.

Vorteile der Erfindung

Wie schon erwähnt, geht die Erfindung von einer Antiblockierregelung mit einer Giermomentbegrenzung aus. Erfindungsgemäß ist eine μ-split Erkennung im ABS deshalb vorgesehen, da zunehmend autonome Eingriffe in das Lenksystem eines Fahrzeugs bei μ-split-Fahrsituationen vorgesehen werden. Diese neue μ-split Erkennung läuft nicht unabhängig von der GMB Erkennung, da sie nicht möglich ist, wenn GMB nicht aktiv ist.

Die inhomogene Fahrbahn wird in einer Fahrsituation ermittelt, in der sich das Fahrzeug auf einer Fahrbahn mit seitenweise unterschiedlichen Reibwerten befindet und bei aktiver ABS-Regelung und aktiver Giermomentenbegrenzung (GMB) eines Vorderrades auf der Hochreibwertseite.

Zur Erkennung der inhomogenen Fahrbahn müssen mindestens die folgenden Bedingungen erfüllt sein:

a) ein Vorderrad - LM-Vorderrad genannt - befindet sich in der ABS-Regelung in einer Druckabbauphase,

a1) das LM-Vorderrad ist im ersten ABS-Regelzyklus

b) das LM-Vorderrad zeigt eine größere Verzögerung als eine bestimmte Schwelle,
c) das Blockierdruckniveau des LM-Vorderrades ist kleiner als eine bestimmte Schwelle
d) das Vorderrad auf der Hochreibwertseite - HM-Vorderrad genannt - zeigt eine kleinere gefilterte Verzögerung als eine bestimmte Schwelle
e) die von ABS berechnete Fahrzeugsverzögerung ist kleiner als eine bestimmte Schwelle.

Die beiden ersten Merkmalen a) und a1) sind eine Bestätigung, dass die GMB vom Regler erkannt wird, und dass die Erkennung durch die Phasenbedingung des ABS-Regelzyklus erfolgt ist. Die Phasenbedingung lautet: ein Vorderrad ist in der ABS-Regelung. Das andere Rad ist nicht in der ABS-Regelung. Wenn GMB erkannt ist, ist der Verdacht groß, dass das Fahrzeug auf μ-split bremst.

Die Merkmale b) und c) sind eine Bestätigung, dass das LM-Rad sich wirklich auf einem Niedrigreibwert befindet.

Das Merkmal d)ist eine Bestätigung, dass dieses Vorderrad sich auf der Hochreibwertseite befindet.

Bedingung e) überprüft ob die von der Antiblockierregelung berechnete Fahrzeugverzögerung kleiner als eine bestimmte Schwelle ist. Über die Betrachtung der Fahrzeugverzögerung mit einem Schwellenwert $F_V$, der die maximale Fahrzeugverzögerung bei inhomogenen Fahrbahnen wiedergibt, wird die μ-Split Ermittlung über die Verzögerung der Vorderräder der Niedrigreitwertseite und der Hochreibwertseite plausibilisiert.

Weiterhin erfolgt nach der anhand der Bedingungen a) bis e) durchgeführte Ermittlung der Fahrbahn mit seitenweise unterschiedlichen Reibwerten eine Plausibilisierung über die Betrachtung und Bewertung des Drehverhaltens der Hinterräder. Die Auswertung des Drehverhaltens des LM-Hinterrades und des HM-Hinterrades erfolgt anhand ihrer Verzögerungswerte während der ABS-Regelung, wobei das HM-Hinterrad entsprechend der Fahrzeugverzögerung verzögert während das LM-Hinterrad stärker als die Fahrzeugverzögerung verzögert.

Das Verzögerungssignal des Fahrzeugs wird hierzu aus zwei unterschiedlichen Teilsignalen gebildet. Das erste ist ein tiefpaß-gefiltertes Signal, das aus den gemittelten gefilterten Radverzögerungssignalen gebildet wird. Das andere Signal ist ein Gradient, der innerhalb der Regelung aus jeweils zwei Wertepaaren (Radgeschwindigkeit und zugehöriger Zeitpunkt) in bestimmten Zeitabständen eine Verzögerung bzw. Beschleunigung errechnet. Dieses Signal ist immer dann identisch mit der Fahrzeugverzögerung, wenn alle Räder innerhalb der Regelung und alle Bedingungen zur Gradientenberechnung erfüllt sind (eine erste Druckabbauphase an einem Rad ist schon durchgelaufen). Ansonsten entspricht die Fahrzeugverzögerung dem gefilterten Signal.

Das gefilterte Signal wird dabei wie folgt gebildet:

Außerhalb der Regelung werden alle Räder einbezogen,

1. die sich nicht in Überdrehungsphase befinden,
2. die sich nicht in einer ABS-Regelung befinden,
3. die sich nicht in einer BTCS-( Bremseneingriffs-Antriebs-Schlupf-Regelsystem)Regelung befinden, und
4. deren gefilterten ABS-Verzögerungswerte sich in einem bestimmten Band befinden.

Innerhalb der Regelung (alle Räder in der Regelung) werden nur die Räder berücksichtigt,

1. die sich in Druckaufbauphase befinden.
2. deren ABS-Verzögerungswerte sich in einem bestimmten Band befinden.

Der Gradient wird wie folgt bestimmt:

Zu Beginn eines Schlupfeinlaufes (Kriterium: ABS-Verzögerungswert unterschreitet eine Schwelle) "merkt" sich der Regler ein Wertepaar des betreffenden Rades (Zeitpunkt (t0) und Radgeschwindigkeit (v0)). Nach einer bestimmten Wartezeit (> t1 - t0) wird die Radwiederbeschleunigung des Rades beobachtet. Wird sie geringer (Ende des Schlupfeinlaufes), so wird ein zweites Wertepaar (t2, v2) gespeichert. Nach der Formel dv/dt wird daraus dann ein Gradient gebildet: (v2-v0)/(t2-t0).

Der Schwellenwert Fv liegt vorzugsweise in einem Bereich zwischen 0,6 und 0,8 g.

Zweckmäßig wird bei der Ermittlung des stabilen Rades HM das Beschleunigungssignal gefiltert, um das Signalrauschen zu unterdrücken.

Ist eine inhomogene Fahrbahn erkannt, wird ein Flag gesetzt, das von weiteren Regelsystemen ausgelesen werden kann. Das Flag wird gelöscht bzw. verlernt, wenn die Giermomentenbegrenzung (GMB) inaktiv wird oder wenn die Wiederbeschleunigung des LM-Vorderrades nach einer Druckabbauphase höher als eine bestimmte Schwelle ist. Diese zweite Bedingung ist eine Bestätigung, dass das LM-Rad sich nicht mehr auf einer Niedrigreibwertfahrbahn befindet.

Die gesetzte μ-split Information wird bevorzugt dazu benutzt, um einen Eingriff in ein Lenksystem und darauf folgend einen steileren GMB Druckaufbau zu ermöglichen.

Erfindungsgemäß ist ein Verfahren zur Erzeugung eines additiven Zusatzmoments am Lenkrad eines Fahrzeugs vorgesehen, wobei das Zusatzmoment in Abhängigkeit von der ermittelten inhomogenen Fahrbahn mit seitenweise unterschiedlichen Reibwerten dem Lenksystem aufgeprägt wird. Das Verfahren zum Betrieb eines Lenksystems für ein Fahrzeug sieht wenigstens eine elektrische Servolenkung und eine Fahrerlenkempfehlung vor, wobei durch die Lenkhandhabe die durch den Fahrer initiierte Lenkbewegung $\delta_{DRV}$ und der aus der Fahrerlenkempfehlung initiierte Störgrößen-Kompensationsanteil $\delta_z$ zur Erzeugung der Lenkbewegung additiv überlagert werden. Dabei wird bei gesetzter μ-split Information aus den Bremskräften des Rades der Niedrigreibwertseite und der Hochreibwertseite ein Zusatzmoment ermittelt und als Lenkempfehlung dem Aktuator der Servolenkung zugeführt. Der Betrag des Zusatzmoments ist nur so groß, dass der Fahrer das Lenkrad gegen das Zusatzmoment noch festhalten kann.

Nach einem weiteren Ausführungsbeispiel sind ein oder mehrere Zusatzmomente in einem Speicher abgelegt und werden bei gesetzter μ-split Information als Lenkempfehlung dem Aktuator der Servolenkung zugeführt. Das Zusatzmoment gibt dabei nicht die aus dem aktuellen Bremszustand des Fahrzeugs resultierende Lenkempfehlung zur Kompensation des aus den asymmetrischen Bremskräften resultierende Giermoment für die lenkbaren Räder vor, sondern die Lenkrichtung. Unterschiedliche Zusatzmomente können dabei in Abhängigkeit von der Fahrzeuggeschwindigkeit als Lenkempfehlung dem Aktuator zugeführt werden.

Ausführungsbeispiele der Erfindung sind in den Zeichnungen dargestellt und werden im folgenden näher beschrieben.

Es zeigen:

Fig. 1   eine Darstellung der asymmetrischen Bremskräfte und des Störgiermoments an einem Fahrzeug,

Fig. 2   eine Darstellung des Druckverlaufs der Radbremsen an der Vorderachse und der Hinterachse bei aktiver GMB,

Fig. 3   einen Steuersystem zur Störgrößenaufschaltung,

Fig. 4   eine schematische Darstellung der Fahrerlenkempfehlung DSR der Figur 3

Fig. 5   eine Darstellung der Störgrößenaufschaltung mit Schätzung des Störgiermoments,

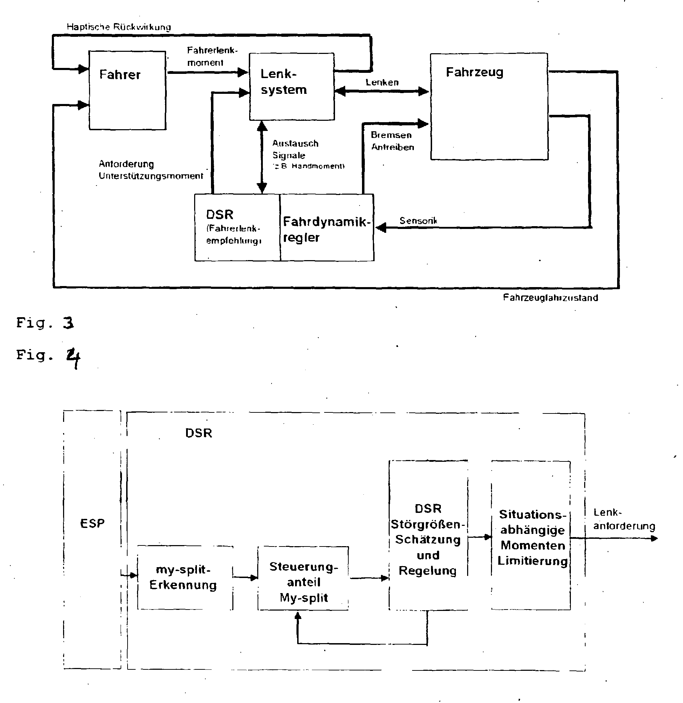

Fig. 3 zeigt ein schematisch dargestelltes integriertes System zur Regelung von elektronisch ansteuerbaren Elementen im Lenkstrang, um dem Fahrer mittels einer Lenkmomentenvorgabe eine Empfehlung in kritischen Situationen zu geben. Hierzu sieht ist eine Vorrichtung vorgesehen, die zur Vorgabe eines Lenkradmomentes zur Empfehlung für den Fahrer in kritischen Situationen geeignet ist. Die Vorrichtung umfasst dabei im wesentlichen einen Fahrdynamikregler ESP, eine Fahrerlenkempfehlung DSR und ein Fahrer unabhängig ansteuerbares Lenksystem. Die Fahrerlenkempfehlung DSR (siehe Fig. 4) umfasst dabei Module, die die Fahrsituationen erkennen, in denen eine Fahrerlenkempfehlung über das einzustellende Zusatzlenkmoment an den Fahrer ausgegeben wird. In diesem Modul wird das Flag über die im ABS ermittelte μ-split Fahrsituation ausgelesen. Ermittlungseinheiten, die aus den Steuerungsanteilen der Fahrsituationen eine Lenkmomentvorgabe berechnen, sind den

Modulen zur Fahrsituationserkennung nachgeschaltet. Diesen Ermittlungseinheiten ist wiederum eine Störgrößenschätzung nachgeschaltet, deren mindestens aus dem Handmoment, dem Istmoment des Servomotors des Lenksystems, dem Lenkwinkel und der Lenkwinkelgeschwindigkeit gebildetes Lastmoment dem Lenkmoment aufgeschaltet wird. Das so gebildete Gesamtmoment wird mit dem vom Fahrer auf das Lenkrad aufgebrachten Handmoment verglichen und in Abhängigkeit von dem Vergleichsergebnis über das eingestellte Lenkmoment dem Fahrer eine Empfehlung in kritischen Situationen gegeben. Nach einer Ausgestaltung wird das Zusatzlenkmoment situationsabhängig limitiert oder als fester Wert vorgegeben.

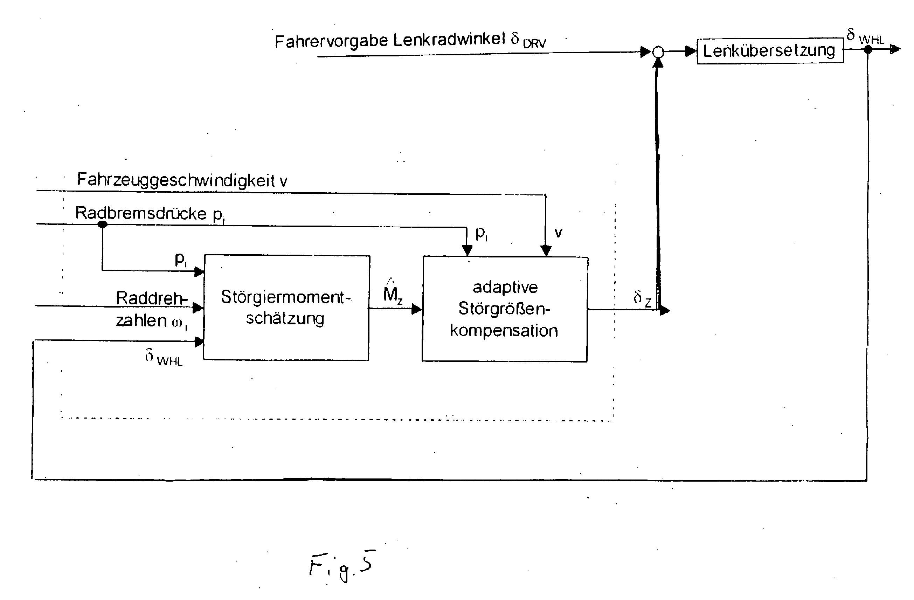

Figur 5 zeigt die Bestimmung des für das automatische Gegenlenken notwendigen Radeinschlagwinkels, der von einer Recheneinheit aus der Störgrößenaufschaltung berechnet wird.

Der Radeinschlagwinkel ergibt sich mit Hilfe dieser Störgrößenaufschaltung bzw. Störgrößenkompensation des während der Bremsung durch die asymmetrischen Bremskräfte hervorgerufenen Störgiermoments $\hat{M}_z$. Dieses Störgiermoment wird in einer Ermittlungseinheit im wesentlichen zuerst aus den Bremsdruckinformationen der einzelnen Räder entsprechend den Gleichungen 1 und 2 auf der Seite 14 geschätzt. Der Ermittlungseinheit werden hierzu als Eingangsgrößen die Radbremsdrücke $p_i$, die Raddrehzahlen $\omega_i$ und der rückgeführte Radeinschlagwinkel $\delta_{WHL}$ zugeführt. Zur Ermittlung der Radbremsdrücke ist ein elektronisches Bremssystem erforderlich, welches entweder die Bremsdrücke an den einzelnen Rädern modellbasiert schätzt bzw. beobachtet, die Bremsdrücke an den einzelnen Rädern mit Hilfe von Drucksensoren misst oder ein Brake-by-Wire System (EHB/EMB), welches auf diesen Größen basiert. Die Bestimmung des Störgiermoments beruht nach Gleichung 2 auf den Bremskräften $\hat{F}_{x,i}$ an den Rädern. Die Bremskräfte können, wie in Gleichung 1 angegeben, im wesentlichen aus den Bremsdruckinformationen berechnet werden oder es können auch Systeme zum Einsatz kommen, welche direkt die Bremskräfte messen (z.B. Seitenwandtorsionssensor, Radnaben, o.ä.). Aus dem geschätzten Störgiermoment, wird abhängig von Fahrzustandsgrößen (z.B. Fahrzeuggeschwindigkeit, Bremsdruckdifferenz zwischen Hoch- und Niedrigreibwert, mittleres Bremsdruckniveau, u.s.w.) adaptiv der zur Kompensation des Störgiermoments nötige Radeinschlagwinkel $\delta_z$ berechnet.

Diese Lenkwinkel-Stellanforderung wird bevorzugt in einem Addierer 31 addiert und dem aktiven Lenksystem in Form eines Lenkzusatzmoments (Radeinschlagwinkels $\delta_{WHL}$) eingestellt.

Nach einer weiteren Ausbildung wird der Radeinschlagwinkel $\delta_{WHL}$) einem aktiven Lenksystem zugeführt, das z.B. mittels einer Überlagerungslenkung, die lenkbaren Räder verstellt.

**Gleichungen:**

1. Schätzung der Bremskräfte aus den Bremsdrücken:
Bilanzgleichung eines Rads bei Vernachlässigung von Antriebsmoment und unter der Annahme, daß die Radaufstandskraft im Radaufstandspunkt angreift

$$J_{Whl}\dot{\omega}_i = M_{br,i} + F_{x,i}r_{Whl.}$$

Daraus ergibt sich mit dem Bremsmoment $M_{br,i}=B^*p_i$ für die Schätzung der Umfangskraft $\hat{F}_{x,i}$ aus Bremsdruck und Radbeschleunigung

$$\hat{F}_{x,i} = \frac{1}{r}B^* p_i + \frac{1}{r}J_{Whl}\dot{\omega}_{i.}$$

Bei geringeren Genauigkeitsanforderungen kann der dynamische Anteil $\frac{1}{r}J_{Whl}\dot{\omega}_i$ vernachlässigt werden und stationär ergibt sich für die Bremskraft der Zusammenhang

$$\hat{F}_{x,i} = \frac{1}{r}B^* p_{i.}$$

2. Schätzung des Störgiermoments aus den Bremskräften
Das Störgiermoment ergibt sich für Fahrzeuge mit Vorderradlenkung mit dem Radeinschlagswinkel $\delta$ und der Fahrzeuggeometrie zu

$$\hat{M}_z = \cos(\delta)\left[\hat{F}_{FL}s_{FL} - \hat{F}_{FR}s_{FR}\right] - \sin(\delta)\left[\hat{F}_{FL}l_F + \hat{F}_{FR}l_F\right] + \hat{F}_{RL}s_{RL} - \hat{F}_{RR}s_{RR}$$

**Patentansprüche**

1. Verfahren zum Ermitteln einer inhomogenen Fahrbahn in einer Fahrsituation von Fahrzeugen, die sich auf einer Fahrbahn mit seitenweise unterschiedlichen Reibwerten ($\mu$ - *split*) bei aktiver ABS-Regelung und aktiver Giermomentenbegrenzung (GMB) eines Vorderrades auf der Hochreibwertseite befinden **dadurch gekennzeichnet, dass** zur Erkennung der Fahrbahn mindestens folgende Bedingungen erfüllt sein müssen:

   a) ein Vorderrad - LM-Vorderrad genannt - befindet sich in der ABS-Regelung in einer Druckabbauphase,

      a1) das LM-Vorderrad ist im ersten ABS-Regelzyklus,

   b) das LM-Vorderrad zeigt eine größere Verzögerung als eine bestimmte Schwelle,
   c) das Blockierdruckniveau des LM-Vorderrades ist kleiner als eine bestimmte Schwelle
   d) das Vorderrad auf der Hochreibwertseite - HM-Vorderrad genannt - zeigt eine kleinere gefilterte Verzögerung als eine bestimmte Schwelle
   e) die von ABS berechnete Fahrzeugsverzögerung ist kleiner als eine bestimmte Schwelle.

2. Verfahren nach Anspruch 1, **dadurch gekennzeichnet, dass** die anhand der Bedingungen a) bis e) durchgeführte Ermittlung der Fahrbahn mit seitenweise unterschiedlichen Reibwerten anhand einer Betrachtung und Bewertung des Drehverhaltens der Hinterräder plausibilisiert werden.

3. Verfahren nach Anspruch 2, **dadurch gekennzeichnet, dass** das Drehverhalten des LM-Hinterrades und des HM-Hinterrades anhand ihrer Verzögerungswerte während der ABS-Regelung bewertet wird.

4. Verfahren nach Anspruch 1, **dadurch gekennzeichnet, dass** die Druckabbauphase des ABS-Regelzyklus anhand von Größen ermittelt wird, die aus den Radgeschwindigkeiten gewonnen werden und im wesentlichen den Schlupf, die ABS-Radverzögerung, die gefilterte ABS-Radverzögerung und eine Integration der ABS-Radverzögerung mit einer Gegenkopplung beschreiben.

5. Verfahren nach Anspruch 1 oder 4, **dadurch gekennzeichnet, dass** zur Ermittlung des stabilen HM-Rades die Beschleunigung gefiltert wird.

6. Verfahren nach einem der Ansprüche 1 bis 5, **dadurch gekennzeichnet, dass** bei erkannter Fahrbahn ein Flag gesetzt wird, der von weiteren Regelsystemen ausgelesen werden kann.

7. Verfahren nach einem der Ansprüche 1 bis 6, **dadurch gekennzeichnet, dass** das Flag gelöscht wird, wenn die Giermomentenbegrenzung (GMB) inaktiv wird oder wenn die Wiederbeschleunigung des LM-Vorderrades nach einer Druckabbauphase höher als eine bestimmte Schwelle ist.

8. Verfahren zur Erzeugung eines additiven Zusatzmoments am Lenkrad oder an den gelenkten Rädern eines Fahrzeugs, wobei das Zusatzmoment in Abhängigkeit von einer Fahrsituation auf einer Fahrbahn mit seitenweise unterschiedlichen Reibwerten ($\mu$ -*split*) aufgeprägt wird, **gekennzeichnet durch** das Ermitteln der Fahrsituation nach einem der Ansprüche 1 bis 7.

9. Verfahren nach Anspruch 8, **dadurch gekennzeichnet, dass** der Betrag des Zusatzmoments nur so groß ist, dass der Fahrer das Lenkrad gegen das Zusatzmoment noch festhalten kann.

10. Verfahren nach einem der Ansprüche 8 bis 9, **dadurch gekennzeichnet, dass** das Zusatzmoment am Lenkrad aus einem Störgrößen-Kompensationsanteil einer Kompensations-Lenkwinkelanforderung $\Delta\delta$ unter Einbeziehung von Bremskraft-Differenzen an den gebremsten Rädern ermittelt wird und der vom Fahrer vorgegebene Lenkwinkel in Abhängigkeit von dem Störgrößen-Kompensationsanteil modifiziert wird.

**11.** Verfahren nach Anspruch 10, **dadurch gekennzeichnet, dass** der Kompensationsanteil $\Delta\delta_z$ unter Einbeziehung eines auf Basis unterschiedlicher Bremskräfte ermittelten Störgiermoments $M_z$ bestimmt wird.

**12.** Verfahren nach einem der Ansprüche 10 bis 11, **dadurch gekennzeichnet, dass** der Kompensationsanteil als Steueranteil vorgesehen ist.

**13.** Verfahren nach Anspruch 11, **dadurch gekennzeichnet, dass** das Störgiermoment $M_z$ durch eine logische Verknüpfung der Radeinschlagwinkel der gelenkten Räder, den Bremsdrücken und dem Drehverhalten der Räder ermittelt wird.

**14.** Verfahren nach Anspruch 13, **dadurch gekennzeichnet, dass** die Bremskräfte aus den Bremsdrücken nach der Beziehung

$$\hat{F}_{x,i} = f\{r, B, p_i, J_{Whl}, \dot{\omega}_i\}$$

mit
$\hat{F}_{x,i}$ = Bremskraft an einem Rad i
$r$ = dynamischer Reifenradius
$B$ = Bremsenkennwert
$p_i$ = Radbremsdruck
$J_{Whl}$ = Trägheitsmoment des Rades
$\dot{\omega}_i$ = Drehbeschleunigung eines Rades i
oder

$$\hat{F}_{x,i} = f\{r, B, p_i\}$$

ermittelt werden.

**15.** Verfahren nach Anspruch 14, **dadurch gekennzeichnet, dass** das Störgiermoment nach der Beziehung

$$\hat{M}_z = f\{\hat{F}_{FL}, s_{FL}, \hat{F}_{FR}, s_{FR}, l_F, \hat{F}_{RL}, s_{RL}, \hat{F}_{RR}, s_{RR}, \delta\}$$

$\hat{F}_{FL}$ = Bremskraft vorne links
$s_{FL}$ = halbe Spurweite des Vorderrades links
$\hat{F}_{FR}$ = Bremskraft vorne rechts
$s_{FR}$ = halbe Spurweite des Vorderrades rechts
$l_F$ = Abstand der Vorderachse vom Schwerpunkt
mit
$\hat{F}_{RL}$ = Bremskraft h int en links
$s_{RL}$ = halbe Spurweite des H int errades links
$\hat{F}_{RR}$ = Bremskraft h int en rechts
$s_{RR}$ = halbe Spurweite des H int errades rechts
$\delta$ = Radeinschlagswinkel der gelenkten Räder
ermittelt wird.

**16.** Verfahren nach einem der Ansprüche 1 bis 9, **dadurch gekennzeichnet, dass** nach dem Ermitteln der Fahrsituation ($\mu$ - *Split*) ein Zusatzmoment am Lenkrad erzeugt wird, das diejenige Lenkradstellung vorgibt, die einen Hinweis auf die zur Stabilisierung des aktuellen Fahrzustandes erforderliche Radstellungsrichtung der lenkbaren Räder gibt.

**17.** Verfahren nach Anspruch 16, **dadurch gekennzeichnet, dass** das Zusatzmoment eine vorgegebene Größe ist, die vom aktuellen Fahrzustand unabhängig ist.

**EP 1 926 643 B1**

**Claims**

1.  Method for determining an inhomogeneous roadway in a driving situation of vehicles which are located on a roadway with different coefficients of friction ($\mu$ - *split)* on different sides when an ABS control system is active and a yaw moment limiting system (GMB) of a front wheel is active on the side with a high coefficient of friction, **characterized in that** at least the following conditions have to be met in order to detect the roadway:

    a) a front wheel - referred to as LM front wheel - is in the pressure reduction phase in the ABS control process,

    a1) the LM front wheel is in the first ABS control cycle;

    b) the LM front wheel exhibits greater deceleration than a specific threshold,
    c) the blocking pressure level of the LM front wheel is lower than a specific threshold,
    d) the front wheel on the side with the high coefficient of friction - referred to as the HM front wheel - exhibits a smaller filtered deceleration than a specific threshold,
    and
    e) the vehicle deceleration which is calculated by ABS is lower than a specific threshold.

2.  Method according to Claim 2, **characterized in that** the plausibility of the determination of the roadway which is carried out by means of the conditions a) to e) is checked with different coefficients of friction on different sides by considering and evaluating the rotational behaviour of the rear wheels.

3.  Method according to Claim 2, **characterized in that** the rotational behaviour of the LM rear wheel and of the HM rear wheel is evaluated by means of their deceleration values during the ABS control process.

4.  Method according to Claim 1, **characterized in that** the pressure reduction phase of the ABS control process is determined by means of variables which are acquired from the wheel speeds and describe essentially the slip, the ABS wheel deceleration, the filtered ABS wheel deceleration and integration of the ABS wheel deceleration with negative feedback.

5.  Method according to Claim 1 or 4, **characterized in that** the acceleration is filtered in order to determine the stable HM wheel.

6.  Method according to one of Claims 1 to 5, **characterized in that,** when the roadway is detected, a flag is set which can be read out by further control systems.

7.  Method according to one of Claims 1 to 6, **characterized in that** the flag is deleted if the yaw moment limiting system (GMB) is inactive or if the reacceleration of the LM front wheel is higher than a specific threshold after a pressure reduction phase.

8.  Method for generating an additive additional moment at the steering wheel or at the steered wheels of a vehicle, wherein the additional moment is impressed, as a function of a driving situation, on a roadway with different coefficients of friction ($\mu$ - *split)* on different sides, **characterized by** the determination of the driving situation according to one of Claims 1 to 7.

9.  Method according to Claim 8, **characterized in that** the absolute value of the additional moment is only of such a magnitude that the driver can still hold the steering wheel tight against the additional moment.

10. Method according to one of Claims 8 to 9, **characterized in that** the additional moment at the steering wheel is determined from an interference-variable compensation component of a compensation steering-angle request $\Delta\delta$ taking into account differences in braking force at the braked wheels, and the steering angle which is predefined by the driver is modified as a function of the interference-variable compensation component.

11. Method according to Claim 10, **characterized in that** the compensation component $\Delta\delta_z$ is determined with the inclusion of an interference yaw moment $M_z$ which is determined on the basis of different braking forces.

12. Method according to one of Claims 10 to 11, **characterized in that** the compensation component is provided as a control component.

**13.** Method according to Claim 11, **characterized in that** the interference yaw moment $M_z$ is determined by a logic combination of the wheel lock angles of the steered wheels, the brake pressures and the rotational behaviour of the wheels.

**14.** Method according to Claim 13, **characterized in that** the braking forces are determined from the brake pressures according to the relationship

$$\hat{F}_{x,i} = f\{r, B, p_i, J_{Whl}, \dot{\omega}_i\}$$

where

$\hat{F}_{x,i}$ = *braking force at a wheel i*
*r = dynamic tyre radius*
*B = braking characteristic value*
$p_i$ = *wheel brake pressure*
$J_{Whl}$ = *moment of mass inertia of the wheel*
$\dot{\omega}_i$ = *rotational acceleration of a wheel i*

or

$$\hat{F}_{x,i} = f\{r, B, p_i\}.$$

**15.** Method according to Claim 14, **characterized in that** the interference yaw moment is determined according to the relationship

$$\hat{M}_z = f\{\hat{F}_{FL}, \overline{s}_{FL}, \hat{F}_{FR}, s_{FR}, I_F, \hat{F}_{RL}, s_{RL}, \hat{F}_{RR}, \overline{s}_{RR}, \delta\}$$

$\hat{F}_{FL}$ = *braking force front left*
$s_{FL}$ = *half track gauge of the left-hand front wheel*
$\hat{F}_{FR}$ = *braking force front right*
$s_{FR}$ = *half track gauge of the right-hand front wheel*
$I_F$ = *distance between front axle and centre of gravity*

where

$\hat{F}_{RL}$ = *braking force rear left*
$s_{RL}$ = *half track gauge of the left-hand rear wheel*
$\hat{F}_{RR}$ = *braking force rear right*
$s_{RR}$ = *half track gauge of the right-hand rear wheel*
$\delta$ = *wheel lock angle of the steered wheels.*

**16.** Method according to one of Claims 1 to 9, **characterized in that,** after the driving situation ($\mu$ - *split)* has been determined, an additional moment is generated at the steering wheel which predefines that steering wheel position which indicates the necessary direction of position of the steerable wheels in order to stabilize the current driving state.

**17.** Method according to Claim 16, **characterized in that** the additional moment is a predefined variable which is independent of the current driving state.

**Revendications**

**1.** Procédé pour détecter l'inhomogénéité d'une bande de circulation dans une situation de conduite de véhicules situés sur une bande de circulation dont les coefficients de frottement ($\mu$ - *split)* latéraux sont différents lorsque la régulation ABS est active et que la restriction du couple de lacet (GMB) d'une roue avant est active sur le côté où le coefficient de frottement est le plus élevé,

**caractérisé en ce que**

pour détecter la bande de circulation, au moins les conditions suivantes doivent être satisfaites :

a) une roue avant appelée roue avant LM se trouve dans la phase de délestage de pression de la régulation ABS,

a1) la roue avant LM se trouve dans le premier cycle de régulation ABS,

b) la roue avant LM présente un ralentissement plus accusé qu'un seuil défini,

c) le niveau de pression de blocage de la roue avant LM est inférieur à un seuil défini,

d) la roue avant située sur le côté où le coefficient de frottement est le plus élevé, appelée roue avant HM, présente un ralentissement filtré inférieur à un seuil défini et

e) le ralentissement du véhicule calculé par l'ABS est inférieur à un seuil défini.

2. Procédé selon la revendication 1, **caractérisé en ce que** la détection de la bande de circulation dont les coefficients de frottement latéraux sont différents réalisée dans les conditions a) à e) est rendue plausible en examinant et évaluant le comportement de rotation des roues arrière.

3. Procédé selon la revendication 2, **caractérisé en ce que** le comportement de rotation de la roue arrière LM et de la roue arrière HM est évalué à l'aide de leur valeur de ralentissement pendant la régulation ABS.

4. Procédé selon la revendication 1, **caractérisé en ce que** la phase de délestage de pression du cycle de régulation ABS est déterminée à l'aide de grandeurs qui sont obtenues à partir des vitesses des roues et décrivent en particulier le patinage, le ralentissement de la roue provoqué par l'ABS, le ralentissement de la roue filtré provoqué par l'ABS et l'intégration du ralentissement de roue par l'ABS avec un contre-couplage.

5. Procédé selon les revendications 1 ou 4, **caractérisé en ce que** pour déterminer si la roue HM est stable, on filtre l'accélération.

6. Procédé selon l'une des revendications 1 à 5, **caractérisé en ce que** lorsque la bande de circulation est détectée, un indicateur qui peut être lu par le reste du système de régulation est placé.

7. Procédé selon l'une des revendications 1 à 6, **caractérisé en ce que** l'indicateur est effacé si la restriction du couple de lacet (GMB) est inactive ou si la réaccélération de la roue avant LM est supérieure à un seuil défini après une phase de délestage de pression.

8. Procédé pour former un couple supplémentaire additif sur la roue directrice ou sur les roues directrices d'un véhicule, le couple supplémentaire étant appliqué en fonction d'une situation de conduite sur une bande de circulation dont les coefficients de frottement latéraux ($\mu$ - *split)* sont différents, **caractérisé par** la détermination de la situation de conduite selon l'une des revendications 1 à 7.

9. Procédé selon la revendication 8, **caractérisé en ce que** le niveau du couple supplémentaire est juste assez élevé pour que le conducteur puisse encore retenir le volant en opposition au couple supplémentaire.

10. Procédé selon l'une des revendications 8 à 9, **caractérisé en ce que** le couple supplémentaire appliqué sur le volant est déterminé à partir d'une portion de compensation des grandeurs perturbatrices d'une consigne de compensation de l'angle de volant $\Delta\delta$ en tenant compte des différences de force de freinage sur les roues freinées et **en ce que** l'angle de volant prédéterminé par le conducteur est modifié en fonction de la portion de compensation des grandeurs perturbatrices.

11. Procédé selon la revendication 10, **caractérisé en ce que** la portion de compensation $\Delta\delta_z$ est déterminée en tenant compte d'un couple de lacet perturbateur $M_z$ déterminé à partir de différentes forces de freinage.

12. Procédé selon l'une des revendications 10 à 11, **caractérisé en ce que** la portion de compensation est prévue sous la forme d'une portion de commande.

**13.** Procédé selon la revendication 11, **caractérisé en ce que** le couple de lacet perturbateur $M_z$ est déterminé par association logique entre l'angle d'attaque des roues directrices, les pressions de freinage et le comportement de rotation des roues.

**14.** Procédé selon la revendication 13, **caractérisé en ce que** les forces de freinage sont déterminées à partir des pressions de freinage en appliquant l'équation:

$$\hat{F}_{x,i} = f\{r, B, p_i, J_{Whl}, \dot{\omega}_i\}$$

dans laquelle

$\hat{F}_{x,i}$ = force de freinage sur la roue i
$r$ = rayon dynamique du bandage de roue
$B$ = valeur caractéristique de freinage
$p_i$ = pression de freinage sur la roue
$J_{Whl}$ = moment d'inertie de la roue
$\dot{\omega}_i$ = accélération de la rotation de la roue i

ou

$$\hat{F}_{x,i} = f\{r, B, p_i\}$$

**15.** Procédé selon la revendication 14, **caractérisé en ce que** le couple de lacet perturbateur est déterminé à partir de l'équation:

$$\hat{M}_z = f\{\hat{F}_{FL}, s_{FL}, \hat{F}_{FR}, s_{FR}, l_F, \hat{F}_{RL}, s_{RL}, \hat{F}_{RR}, s_{RR}, \delta\}$$

$\hat{F}_{FL}$ = force de freinage à l'avant gauche
$s_{FL}$ = moitié de la largeur de la bande de roulement de la roue avant gauche
$\hat{F}_{FR}$ = force de freinage à l'avant droit
$s_{FR}$ = moitié de la largeur de la bande de roulement de la roue avant droite
$l_F$ = distance entre l'essieu avant et le centre de gravité

avec

$\hat{F}_{RL}$ = force de freinage à l'arrière gauche
$s_{RL}$ = moitié de la largeur de la bande de roulement de la roue arrière gauche
$\hat{F}_{RR}$ = force de freinage à l'arrière droit
$s_{RR}$ = moitié de la largueur de la bande de roulement de la roue arrière droite
$\delta$ = angle d'attaque des roues directrices.

**16.** Procédé selon l'une des revendications 1 à 9, **caractérisé en ce qu'**après la détermination de la situation de conduite ($\mu$ - *split*), on applique sur la roue directrice un couple supplémentaire qui définit la position de la roue directrice qui donne une indication sur l'orientation des roues directrices nécessaire pour stabiliser la situation de conduite actuelle.

**17.** Procédé selon la revendication 16, **caractérisé en ce que** le couple supplémentaire est une valeur prédéterminée qui dépend de l'état de conduite actuelle.

**Fig. 1**     asymmetrische Bremskräfte und Störgiermoment

Bremsbeginn

Giermomentbegrenzung aktiv

Sympathiedruckabbau
am Hochreibwertrad

Bremsdrücke

Zeit

—— Druckverlauf am Vorderrad auf Niedrigreibwertseite

—·— Druckverlauf am Vorderrad auf Hochreibwertseite

**Fig. 2a**   Druckverlauf an Vorderachse bei aktiver Giermomentbegrenzung

Bremsbeginn

Bremsdrücke

SelectLow aktiv

Zeit

—— Druckverlauf am Hinterrad auf Niedrigreibwertseite

Druckverlauf am Hinterrad auf Hochreibwertseite

**Fig. 2b** : Druckverlauf an Hinterachse bei aktivem SelectLow

Fig. 3

Fig. 4

Fahrervorgabe Lenkradwinkel $\delta_{DRV}$

Lenkübersetzung

$\delta_{WHL}$

Fahrzeuggeschwindigkeit v

Radbremsdrücke $p_i$

$p_i$

v

$p_i$

Störgiermoment-schätzung

$\hat{M}_z$

adaptive Störgrößen-kompensation

$\delta_Z$

Raddreh-zahlen $\omega_i$

$\delta_{WHL}$

Fig. 5

EP 1 926 643 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3925828 A1
- DE 4114734 A1
- DE 4441624 A1
- DE 4038079 A1
- WO 2004005093 A1